# FASCICULE DE BREVET EUROPEEN

(11) **EP 3 352 902 B1**
(45) Date de publication et mention de la délivrance du brevet: **07.08.2019**
(21) Numéro de dépôt: 16775524.8
(22) Date de dépôt: 20.09.2016
(51) Int. Cl.: B01D 67/00, B01J 35/06, B01J 23/14, B01J 23/06, B01D 69/14, B01D 71/02, B01J 35/00, C02F 1/32, C02F 1/44, C02F 1/72, C02F 101/30

(54) **MEMBRANES DE FILTRATION BIOCOMPATIBLES ET POREUSES COMPRENANT DES PHOTOCATALYSEURS**
BIOKOMPATIBLE PORÖSE FILTRATIONSMEMBRANEN MIT FOTOKATALYSATOREN
BIOCOMPATIBLE, POROUS FILTERING MEMBRANES INCLUDING PHOTOCATALYSTS

(30) Priorité: 24.09.2015 LU 92836
(43) Date de publication de la demande: 01.08.2018
(73) Titulaire: Luxembourg Institute of Science and Technology, 4362 Esch-sur-Alzette (LU)
(72) Inventeur: LAMBLIN, Guillaume, 5590 Ciney (BE); LENOBLE, Damien, 69200 Wellin (BE); ROGÉ, Vincent, 57100 Thionville (FR)
(74) Mandataire: Lecomte & Partners
(86) Numéro de dépôt international: PCT/EP2016/072282
(87) Numéro de publication internationale: WO 2017/050749

(56) Documents cités:
- EP-A1- 1 555 064
- XING HUANG ET AL: "Type-II ZnO nanorod-SnO2 nanoparticle heterostructures: characterization of structural, optical and photocatalytic properties", NANOSCALE, vol. 5, no. 9, 1 janvier 2013 (2013-01-01) , page 3828, XP055280493, United Kingdom ISSN: 2040-3364, DOI: 10.1039/c3nr34327h cité dans la demande
- V. ROGÉ ET AL: "Improvement of the photocatalytic degradation property of atomic layer deposited ZnO thin films: the interplay between film properties and functional performances", JOURNAL OF MATERIALS CHEMISTRY A: MATERIALS FOR ENERGY AND SUSTAINABILITY, vol. 3, no. 21, 20 avril 2015 (2015-04-20) , pages 11453-11461, XP055280487, GB ISSN: 2050-7488, DOI: 10.1039/C5TA01637A

## Description

### Domaine

L'invention a trait à des membranes poreuses comprenant des photocatalyseurs destinés à traiter ou à retraiter les eaux de surfaces. Plus particulièrement, les photocatalyseurs sont composés d'hétérostructures de type ZnO/SnO₂.

### Art antérieur

Les procédés de filtration pour le traitement ou retraitement des eaux de surface sont de nos jours largement répandus. Ils sont utilisés par les communes dans les stations d'épurations, les industriels ou encore chez les particuliers.

L'intégration de matériaux photocatalytiques nanostructurés au sein des matériaux de filtration reste cependant encore largement peu fréquent.

Différents types de nanostructures à base de ZnO et SnO₂ ont déjà été publiés.

Des micro-pyramides de type noyau-enveloppe ZnO/SnO₂ ont été préparées via un procédé de déposition chimique en phase gazeuse. (Kuang Q. et al., Inorg. Chem. Font., 2014, 1, 186-192).

Des nano-catalyseurs nanoporeux avec une hétérojonction SnO₂/ZnO ont été préparés selon une procédure en deux étapes, la première étant la synthèse de nanoparticules de SnO₂ par précipitation homogène combiné par un traitement hydrothermique, la seconde étant la réaction de ces nanoparticules de SnO₂ avec de l'acétate de zinc suivi d'une calcination à 500°C (Uddin T. et al., Inorg. Chem., 2012, 51, 7764-7773).

Des nanocomposites de photocatalyseurs à base de ZnO/SnO₂ ont été synthétisés par une méthode de co-précipitation. Le photocatalyseur est ensuite calciné à 600°C pendant 2h et possède une activité photocatalytique quant à la dégradation du bleu de méthylène qui est deux fois supérieure à celle du ZnO et dix fois supérieure à celle du SnO₂. L'effet de l'hétérojonction ZnO/SnO₂ est la base de cette activité (Hamrouni A. et al., Mat. Sci. Eng. B, 2013, 178, 1371-1379).

Une hétérostructure de nanofils de ZnO avec des nanoparticules de SnO₂ a été préparée par une méthode d'évaporation thermique en deux étapes (croissance des nanofils de ZnO sur une surface de silicium à 600°C suivi d'une fonctionalisation avec de la poudre de SnO₂ à 850°C). Il a été montré que la photodégradation de la rhodamine B par cette hétérostructure est plus efficace que lorsque du ZnO seul est utilisé. Cela s'explique par la séparation spatiale de charge entre les nanofils de ZnO et les nanoparticules de SnO₂ qui minimise la recombinaison de charges le long de l'hétérointerface tridimensionnelle, favorisant dès lors les applications photovoltaïques et photocatalytiques de cette architecture particulière (Huang X. et al., Nanoscale, 2013, 5, 3828-3833).

Des nanofils de type noyau-enveloppe ZnO/SnO₂ ont été développés selon une stratégie de synthèse en deux étapes, à savoir la synthèse hydrothermale des nanofils de ZnO suivi du revêtement d'une couche de SnO₂ sur la surface des nanofils. L'obtention du nanofil de ZnO, ou d'une nano-aiguille, au détriment de l'obtention d'une forme hexagonale, se fait avec addition de fluorure lors de la synthèse hydrothermale (Zhou Y. et al., Appl. Surf. Sci., 2014, 292, 111-116).

Il est par ailleurs connu que les nanoparticules de ZnO peuvent présenter des effets oxydants, génotoxiques et cytotoxiques (Hanley C. et al., Nanotech., 2008, 19 (29), 295103). Il a été suggéré que la toxicité provenait des nanoparticules elles-mêmes, ainsi que des ions Zn²⁺ résultant de leur dissolution, mais que le mécanisme impliqué dans chacun des deux cas était différent (Poynton et al., Environ. Sci. Technol., 2011, 45 (2), 762-768). La croissance de nano-structures de ZnO sur des substrats apparaît alors comme un procédé permettant d'éviter la toxicité liée au matériau lui-même. Mais celle liée à la dissolution du ZnO sous forme d'ions reste dans ce cas encore présente.

Il a été montré que la dissolution rapide de nanoparticules de ZnO sous forme de Zn²⁺ induisait une toxicité sur des cellules de type HaCat (cellules de la peau humaine) (Lee P.L. et al., J. Hazard. Mat., 2014, 277, 3-12).

Il a aussi été montré que la dissolution de ZnO en solution peut affecter la viabilité de macrophages, même en absence de contact direct entre ces derniers et le ZnO (Zaveri T.D., et al., Biomaterials, 2010, 31 (11), 2999-3007).

### Résumé de l'invention

### Problème technique

L'invention a pour objectif de proposer un procédé de synthèse d'une hétérostructure ZnO/SnO₂ dans des conditions relativement douce par rapport aux méthodes connues tout en conservant l'activité photocatalytique. Le procédé selon l'invention a également pour objectif de s'affranchir des problèmes de toxicité qui sont connus lorsqu'une structure comportant du ZnO est utilisée.

### Solution technique

Le premier objet de l'invention a trait à un procédé pour synthétiser des hétérostructures comprenant des nanofils de ZnO partiellement recouverts de nanoparticules de SnO₂, lesdites hétérostructures étant intégrées dans un substrat poreux. Ledit procédé comprend les étapes (a) d'activation dudit substrat poreux par déposition d'un film de ZnO, ladite étape d'activation nécessitant un premier précurseur de zinc, (b) de croissance de nanofils de ZnO sur ledit substrat poreux activé lors de l'étape (a), ladite étape de croissance nécessitant un second précurseur de zinc ; (c) de déposition de nanoparticules de SnO₂ sur lesdits nanofils de ZnO obtenus lors de l'étape (b), ladite étape de déposition nécessitant un précurseur d'étain. Ledit procédé est remarquable en ce que l'étape (c) est réalisée à une température comprise entre 250°C et 350°C, préférentiellement à 300°C et en ce qu'un contrôle du taux de déposition des nanoparticules de SnO₂ est effectué.

Ledit procédé comprend en outre une étape de traitement desdites hétérostructures au moyen de l'ultraviolet et/ou de l'ozone.

Selon un mode de réalisation préférentiel, l'étape (c) est réalisée par la technique de déposition de couche atomique, ladite technique étant configurée pour contrôler le taux de déposition des nanoparticules de SnO₂ sur lesdits nanofils de ZnO obtenus lors de l'étape (b).

Selon un mode de réalisation préférentiel, une étape de recuit est réalisée entre l'étape (b) et l'étape (c), ladite étape de recuit étant réalisée à une température comprise entre 250°C et 350°C, préférentiellement 300°C.

Selon un mode de réalisation préférentiel, l'étape (b) est réalisée à une température comprise entre 70°C et 100°C, préférentiellement à 80°C, pendant une durée comprise entre 0,5 heure et 7 heures, préférentiellement entre 4 heures et 6 heures, plus préférentiellement 5 heures et/ou en ce que le premier précurseur de zinc est le diéthylzinc, le second précurseur de zinc est l'acétate de zinc et le précurseur d'étain est le tétrachlorure d'étain.

Le second objet de l'invention a trait à une hétérostructure comprenant des nanofils de ZnO partiellement recouverts de nanoparticules de SnO₂ obtenue par le procédé en accord avec le premier objet de l'invention.

Selon un mode de réalisation préférentiel, ladite hétérostructure présente un taux de recouvrement du ZnO par les nanoparticules de SnO₂ compris entre 40% et 70%, préférentiellement compris entre 50% et 58%.

Selon un mode de réalisation préférentiel, ladite hétérostructure est un oxydant.

Selon un mode de réalisation préférentiel, les propriétés photocatalytiques de ladite hétérostructure sont au moins équivalentes aux propriétés photocatalytiques du ZnO seul.

Selon un mode de réalisation préférentiel, ladite hétérostructure est insoluble dans l'eau.

Selon un mode de réalisation préférentiel, lesdites nanoparticules de SnO₂ sont transparentes à la lumière, préférentiellement transparentes au rayonnement ultraviolet émis par la lumière solaire.

Le troisième objet de l'invention a trait à un substrat poreux adapté pour faire partie d'un dispositif de filtration photocatalytique, caractérisée en ce que ledit substrat poreux est partiellement ou totalement recouvert d'hétérostructure en accord avec le second objet de l'invention, ledit substrat poreux étant configuré pour faciliter le traitement photocatalytique d'au moins un micropolluant présent dans l'eau, ledit au moins un micropolluant faisant préférentiellement partie des dérivés antibiotiques, fongicides, pesticides, insecticides, hormonaux, et/ou n'importe quelle combinaison de ceux-ci, ledit au moins un micropolluant étant plus préférentiellement l'acide acétylsalicylique, la carbamazépine, la lidocaïne, le métoprolol, l'aténolol, la sulfadimidine, le dichlophénac, le propanolol, leurs dérivés, et/ou n'importe quelle combinaison de ceux-ci.

Selon un mode de réalisation préférentiel, ledit substrat poreux est une membrane poreuse dont les pores sont des macropores ou des mésopores.

Le quatrième objet de l'invention a trait à un dispositif de filtration photocatalytique adapté à dégrader de manière photocatalytique au moins un micropolluant présent dans l'eau, caractérisé en ce que ledit dispositif comprend au moins un substrat poreux en accord avec le troisième objet de l'invention.

Le cinquième objet de l'invention a trait à une utilisation d'une hétérostructure comprenant des nanofils de ZnO partiellement recouverts de nanoparticules de SnO₂ en accord avec l'hétérostructure selon le second objet de l'invention, dans un procédé de dégradation d'au moins un micropolluant présent dans l'eau, ledit au moins un micropolluant faisant préférentiellement partie des dérivés antibiotiques, fongicides, pesticides, insecticides, hormonaux, et/ou n'importe quelle combinaison de ceux-ci, ledit au moins un micropolluant étant plus préférentiellement l'acide acétylsalicylique, la carbamazépine, la lidocaïne, le métoprolol, l'aténolol, la sulfadimidine, le dichlophénac, le propanolol, leurs dérivés, et/ou n'importe quelle combinaison de ceux-ci.

L'invention a également pour objet une hétérostructure comprenant des nanofils de ZnO recouverts de nanoparticules de SnO₂. Ladite hétérostructure est intégrée dans un substrat poreux, en particulier macroporeux ou mésoporeux. Ledit substrat poreux est fonctionnalisé par un film de ZnO, préférentiellement avec une épaisseur de 20 nm. Ledit film de ZnO est fonctionnalisé par des nanofils de ZnO. Lesdits nanofils de ZnO sont fonctionnalisés par un dépôt de nanoparticules de SnO₂. Ladite hétérostructure est remarquable en ce que le taux de recouvrement du ZnO par les nanoparticules de SnO₂ est compris entre 40% et 70%, préférentiellement compris entre 50% et 58%.

Selon un mode de réalisation préférentiel, ladite hétérostructure est un oxydant.

Selon un mode de réalisation préférentiel, les propriétés photocatalytiques de ladite hétérostructure sont au moins équivalentes aux propriétés photocatalytiques du ZnO seul.

Selon un mode de réalisation préférentiel, ladite hétérostructure est insoluble dans l'eau.

Selon un mode de réalisation préférentiel, lesdites nanoparticules de SnO₂ sont transparentes à la lumière, préférentiellement transparentes au rayonnement ultraviolet émis par la lumière solaire.

### Avantages de l'invention

Le procédé de synthèse selon la présente invention permet l'obtention d'hétérostructures ZnO/SnO₂ qui sont stables et qui présentent une activité photocatalytiques remarquables pour dégrader toutes sortes de micropolluants présents dans l'eau. Les hétérostructures de la présente invention se sont en fait montrées comme étant biocompatibles. Notamment, les hétérostructures de la présente invention ne démontrent pas de cytotoxicité envers les cellules de type Caco-2. Un avantage supplémentaire du procédé de synthèse est l'utilisation d'une température relativement basse permettant le traitement d'un grand nombre de matériau.

### Description des dessins

Figure 1 : Photographies MEB de structures de SnO₂ réalisées par ALD pour différents nombres de cycles sur des nanofils de ZnO synthétisés dans des membranes macroporeuses.
Figure 2 : Evaluation du taux de recouvrement des nanofils de ZnO par SnO₂ en fonction du nombre de cycles de procédé ALD. Estimation réalisée à partir du logiciel de traitement d'image ImageJ.
Figure 3 : Spectres de photoluminescence de nanofils de ZnO recouverts ou non de SnO₂.
Figure 4 : Diffractogrammes de nanofils de ZnO recouverts de plus ou moins de nanoparticules de SnO₂.
Figure 5a : Analyse XPS en haute résolution du pic Zn₂ₚ pour le ZnO.
Figure 5b : Analyse XPS en haute résolution du pic Sn_{3d} pour le SnO₂.
Figure 5c : Maximum de la bande de valence pour le ZnO.
Figure 5d : Maximum de la bande de valence pour le SnO₂.
Figure 5e : Courbe de Tauc pour le ZnO.
Figure 5f : Courbe de Tauc pour le SnO₂.
Figure 5g : Analyse XPS en haute résolution du pic Zn₂ₚ pour l'hétérostructure ZnO/SnO₂.
Figure 5h : Analyse XPS en haute résolution du pic Sn_{3d} pour l'hétérostructure ZnO/SnO₂.
Figure 6 : Energie de liaisons et maximum des bandes de valence déterminés par XPS pour le ZnO, SnO₂ et l'hétérostructure ZnO/SnO₂.
Figure 7 : Schéma représentant la migration des porteurs de charges électrons/trous dans le cas d'un recouvrement total et partiel de ZnO par SnO₂.
Figure 8 : Image MEB de nanofils de ZnO totalement recouverts par un nanofilm de SnO₂.
Figure 9 : Photodégradation de l'acide salicylique par des nanofils de ZnO totalement recouverts par un nanofilm de SnO₂.
Figure 10 : Courbe de photodégradation du bleu de méthylène par des nanofils de Zno recouverts de nanoparticules de SnO₂.
Figure 11 : Constantes de dégradation d'ordre 1 pour des nanofils de ZnO différemment recouverts de nanoparticules de SnO₂.
Figure 12 : Analyse SIMS d'un nanofilm de SnO₂ déposé par ALD recouvrant un nanofilm de ZnO.
Figure 13: Photodégradation sous lumière UV (365 nm) du bleu de méthylène par des nanofilms de ZnO et une hétérostructure de ZnO/SnO₂ (1000 cycles de SnO₂) avant et après retraitement sous ozone.
Figure 14 : Analyse MEB en coupe transversale des membranes d'alumine poreuses (a) recouvertes de ZnO (b), ZnO/Al₂O₃ (c) et ZnO/SnO₂ (d).
Figure 15 : Analyse XPS de la composition chimique de films de ZnO, ZnO/Al₂O₃ et ZnO/SnO₂.
Figure 16: Spectres d'émission optique pour (a) des films de ZnO, ZnO/Al₂O₃ et ZnO/SnO₂ sur substrats de silicium et pour (b) des films de ZnO, ZnO/Al₂O₃ et ZnO/SnO₂ dans de l'alumine poreuse.
Figure 17 : Effet des films de ZnO, ZnO/Al₂O₃ et ZnO/SnO₂ déposés dans des membranes d'alumine poreuse sur des cellules de type Caco-2/TC7. Les résultats sont représentés relativement par rapport à un témoin.
Figure 18 : Analyse de microtoxicité de nano-films de ZnO, ZnO/Al₂O₃ et ZnO/SnO₂ sur des bactéries de type *Vibrio fischeri.* Les résultats sont représentés en pourcentages relatifs par rapport à un témoin.
Figure 19 : Mesures ICP-MS de la concentration en Zn²⁺, Al³⁺ et Sn⁴⁺ dans les milieux de culture cellulaire après exposition à différents matériaux.
Figure 20 : Images MEB de films de ZnO, ZnO/Al₂O₃ et ZnO/SnO₂ avant et après tests de toxicité sur cellules Caco-2/TC7.
Figure 21 : Analyses XPS de la composition chimique des films de ZnO, ZnO/Al₂O₃ et ZnO/SnO₂ dans les membranes poreuses d'alumine après tests de toxicités sur cellules Caco-2/TC7.
Figure 22 : Spectre d'émission des nano-films de ZnO/Al₂O₃ avant et après tests de toxicité sur cellules Caco-2/TC7.

### Description d'un mode de réalisation

La synthèse des hétérostructures ZnO/SnO₂ est réalisée en trois étapes.

Une première étape d'activation du substrat macroporeux ou mésoporeux est réalisée au moyen de l'ALD *(Atomic Layer Deposition).* Un fin film de ZnO est ainsi déposé sur ledit substrat pour servir de couche catalytique pour la nucléation des nanofils de ZnO. Le fin film est généralement d'une épaisseur de 20 nm et est réalisé à 80°C par injection séquentielle pulsée de deux précurseurs : le diéthylzinc et l'eau. Le temps de pulse est de 200 ms pour chaque précurseur. 2 seconde de purge, à l'aide d'un gaz inerte, est effectué entre chaque pulse. Le fin film de ZnO est réalisé après 100 cycles ALD.

Dans le cas présent, c'est un substrat macroporeux qui a été choisi. Ce substrat présente des pores dont le diamètre moyen est de 200 nm.

Les substrats poreux sont par exemple et d'une manière non limitative choisis parmi des matériaux polymères pouvant résistes aux hautes températures, plus particulièrement les polyimides (par exemple, le kapton), des matériaux céramique (par exemple l'alumine, la silice, le dioxyde de titane, le dioxyde de zirconium, la fibre de verre) et/ou des matériaux hybrides (mélanges entre des matériaux polymères et matériaux céramiques).

Le substrat poreux est préférentiellement choisi parmi les matériaux céramiques, en particulier l'alumine et/ou la fibre de verre.

Dans une seconde étape, dite étape de synthèse hydrothermale, les nanofils de ZnO sont préparés à partir d'une solution réactionnelle composée de précurseur, en particulier de l'acétate de zinc, dissous dans une solution d'eau distillée contenant de l'hydrazine. Il est entendu que d'autres précurseurs à base de zinc peuvent être utilisés. La concentration en précurseur est de 25 mM. Le substrat macroporeux ou mésoporeux sur lequel doivent être fabriqués ces nanofils de ZnO est immergé dans cette solution laissée sous agitation à 80°C pendant 5h.

La synthèse hydrothermale (ou solvothermale dans le cas d'un réacteur à pression atmosphérique) a pour avantage d'être réalisable avec un dispositif expérimental très simple et peu coûteux. La réaction peut avoir lieu avec un bécher chauffé à l'aide d'une plaque chauffante. Le solvant utilisé lors de la croissance hydrothermale étant l'eau distillée et le système n'étant pas prévu pour travailler sous pression, la température maximale de travail est de 100 °C, soit la température d'ébullition de l'eau. La plaque chauffante utilisée est une plaque C-MAG HS 7 de chez IKA, munie d'un thermocouple afin de mesurer et contrôler précisément la température de la solution. Un agitateur rotatif magnétique assure une homogénéisation des espèces dans la solution. Les substrats ont été introduits dans le bécher à l'aide d'un porte substrat permettant une exposition de l'ensemble de la surface de travail aux précurseurs.

Dans une troisième étape, les substrats contenant les nanofils sont recuits entre 30 minutes et 1 heure à 300°C dans la chambre de l'ALD, afin d'éliminer au maximum les défauts présents dans la structure. Le recuit est effectué dans le réacteur ALD afin de pouvoir réaliser le dépôt de nanoparticules de SnO₂ sur les substrats fonctionnalisés par les nanofils de ZnO sans exposer les nanofils à une éventuelle contamination atmosphérique. Dès lors, le dépôt des nanoparticules de SnO₂ est effectué en injectant séquentiellement les précurseurs de tétrachlorure d'étain et d'eau à 300°C. Le temps de pulse est de 200 ms pour chaque précurseurs. 2 secondes de purge, à l'aide d'un gaz inerte, est effectué entre chaque pulse.

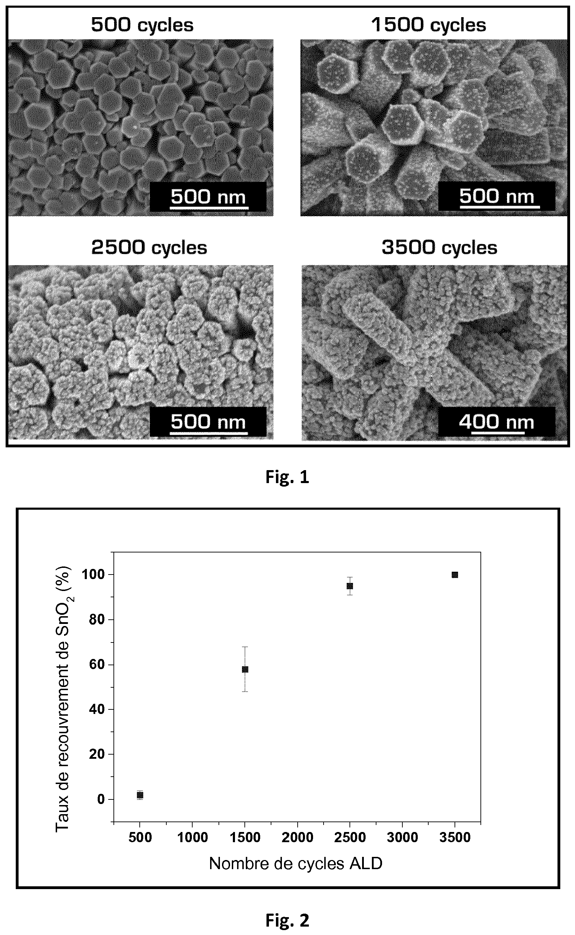

Grâce à la technique de déposition par ALD, il est possible de réaliser des hétérostructures présentant une morphologie différente, en jouant sur le nombre de cycles d'exposition aux précurseurs. Il est ainsi possible de déposer plus ou moins de nanoparticules en fonction du nombre de cycles de synthèse. Les structures obtenues suivant cette stratégie sont illustrées sur la figure 1.

La figure 1 permet ainsi de distinguer clairement la différence de croissance de SnO₂ sur les nano-fils de ZnO en fonction du nombre de cycles appliqués. Pour 500 cycles, très peu de nanoparticules sont visibles. Le taux de recouvrement du SnO₂ est inférieur à 5 % comme le montre la figure 2. En revanche, après 1500 cycles, le taux de recouvrement du ZnO est compris entre 50 et 58 %. Après 2500 cycles, le taux de recouvrement est proche de 95 %. A 3500 cycles, le taux de recouvrement est de 100%.

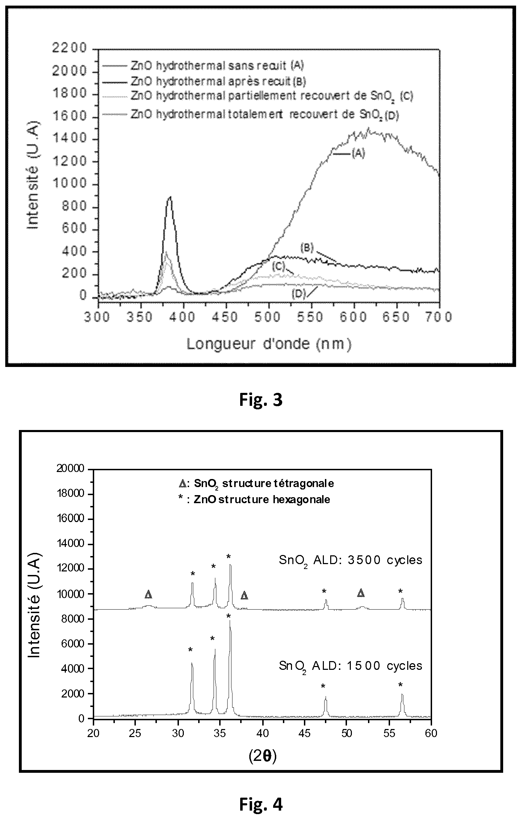

La photoluminescence de ces systèmes est présentée sur la figure 3. Les nano-fils de ZnO synthétisés par voie hydrothermale montrent une émission dans le domaine du visible due aux défauts dans le matériau. Après recuit, une grande partie des défauts est éliminée et le pic excitonique apparaît de façon très intense.

Lorsque les nano-fils de ZnO sont recouverts partiellement ou totalement par SnO₂, l'intensité du pic excitonique diminue mais il est toujours présent. L'activité photoluminescente dans le domaine du proche UV (300-400 nm) du ZnO recouvert de nanoparticules de SnO₂ révèle des propriétés de transparence du SnO₂ à ces longueurs d'onde. Cette information confirme que des excitons peuvent être créés dans le ZnO recouvert de SnO₂.

Les nanoparticules de SnO₂ des hétérostructures ZnO/SnO₂ sont donc préférentiellement transparentes à la lumière, en particulier au rayonnement ultraviolet du spectre solaire.

Des analyses de diffraction des rayons X sur les hétérostructures réalisées à 1500 et 3500 cycles de déposition de SnO₂ sont représentées sur la figure 4. Les diffractogrammes enregistrés indiquent une structure cristalline du ZnO correspondant à la structure hexagonale wurtzite. Après 1500 cycles de déposition de SnO₂, aucun pic correspondant au cristal cassitérite n'est visible, la quantité de matière déposée étant surement trop faible. En effet, des pics de diffraction associés aux plans (100), (101) et (211) du SnO₂ cassitérite tétragonal ne sont observables qu'après 3500 cycles de procédé ALD.

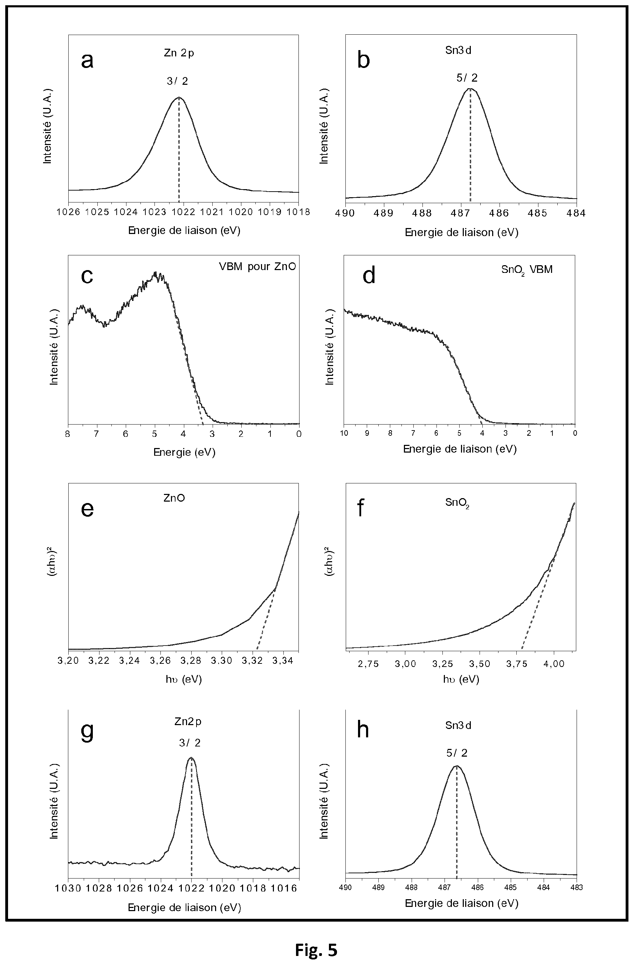

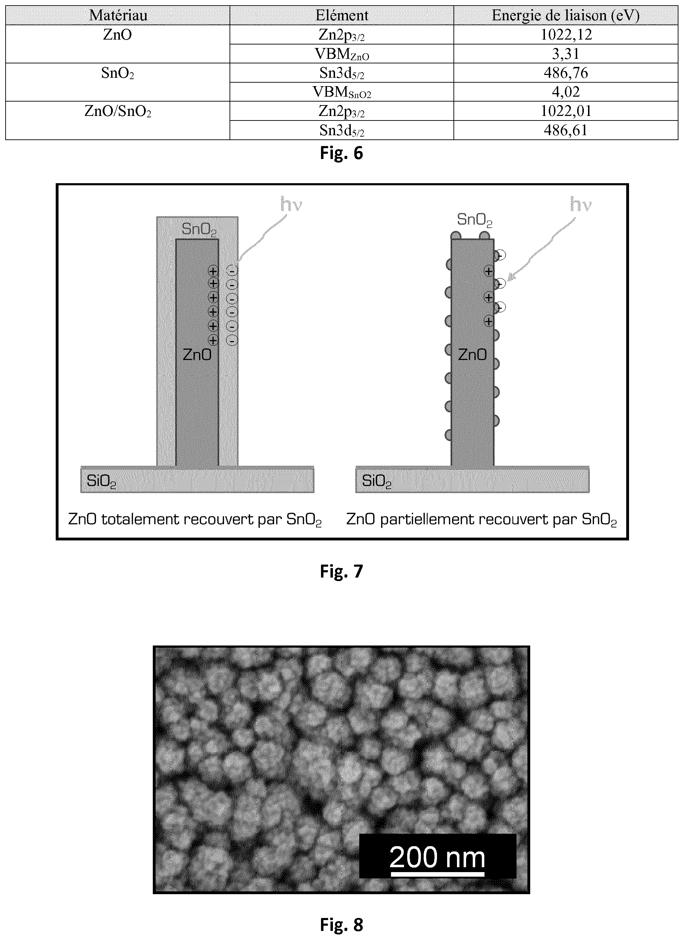

Afin de vérifier la présence de l'hétérostructure, des analyses XPS ont permis de déterminer précisément les différences d'énergie entre les bandes de valence et de conduction au niveau de l'hétérojonction ZnO/SnO₂. La figure 5 représente les pics enregistrés en haute résolution pour les pics Zn2p_{3/2} (a) et Sn3d_{5/2} (b), ainsi que le maximum de la bande de valence du ZnO (c) et du SnO₂ (d). Le gap optique du ZnO et du SnO₂ a été déterminé à partir de la courbe de Tauc (e et f). L'analyse XPS en haute résolution des pic Zn2p_{3/2} et Sn3d_{5/2} apparaît en (g) et (h). La position exacte de chacun des pics relevés apparaît à la figure 6. Le gap optique du ZnO déterminé par absorbance est de l'ordre de 3,3 eV, alors que celui du SnO₂ est de l'ordre de 3,7 eV. Ces valeurs mesurées sont en accord avec celles que l'on peut retrouver dans la littérature, pour le même type de nano-films.

La différence d'énergie au niveau des bandes de valence et de conduction à l'interface de l'hétérostructure ZnO/SnO₂ a été déterminé selon des processus mathématiques connus par l'homme du métier. La différence d'énergie des bandes de valences est estimée à 0,67 eV, alors que celle des bandes de conduction est d'environ 0,24 eV. Des résultats similaires peuvent être trouvés dans la littérature concernant l'alignement des bandes à l'interface ZnO/SnO₂, ce qui confirme la présence de l'hétérojonction entre le ZnO et le SnO₂. Avec ces résultats, une hétérostructure entre le ZnO et le SnO₂ avec les propriétés électroniques et optiques attendues est confirmée.

L'influence du recouvrement des nanofils de ZnO par les nanoparticules de SnO₂ sur les propriétés photocatalytiques de l'hétérostructure a été étudiée.

Selon le diagramme de bande de l'hétérostructure ZnO/SnO₂, les électrons créés migrent vers la bande de conduction du SnO₂ et les trous vers la bande de valence du ZnO. Dans le cas présent, du SnO₂ est déposé sur du ZnO. Ainsi, les électrons sont délocalisés vers la surface de la structure et les trous vers le centre du matériau, comme représenté sur la figure 7. Sachant que lors d'un procédé de photodégradation les trous sont plus actifs que les électrons, les piéger dans le matériau pourrait limiter fortement les cinétiques de dégradation. En revanche, dans le cas des nanoparticules de SnO₂ ne recouvrant pas totalement la surface, les trous dans la bande de valence du ZnO peuvent toujours accéder à la surface, au niveau des zones de ZnO dégagées. Concernant les électrons, ils sont eux aussi accessibles au niveau des nanoparticules de SnO₂. Avec un tel système, il semble possible de profiter à la fois d'une séparation des charges e⁻/h⁺, tout en maximisant la probabilité qu'ils restent actifs à l'interface matériau/solution.

La figure 8 indique une image MEB de nanofils de ZnO recouverts de manière homogène par un nanofilm de SnO₂.

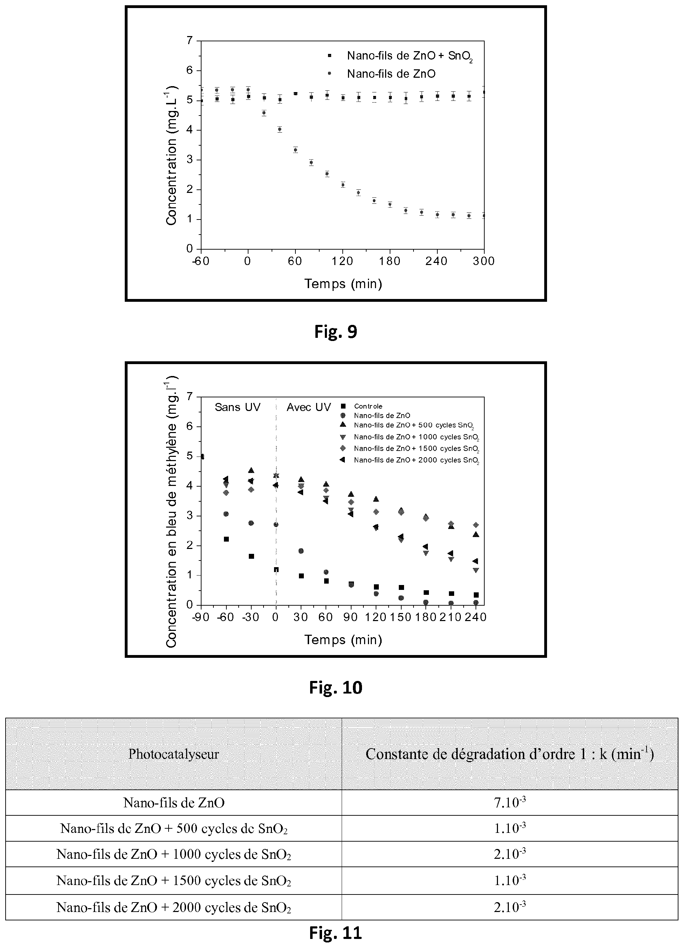

La figure 9 correspond à la photodégradation de l'acide salicylique par l'hétérostructure ZnO/SnO₂ telle que montrée sur la figure 8. Il apparaît clairement que l'activité photocatalytique des nanofils de ZnO disparaît totalement après recouvrement par un nanofilm de SnO₂.

Ce résultat est assez inattendu, car il met en évidence non pas une amélioration, mais une détérioration du procédé photocatalytique. Sachant que le ZnO seul est actif, et que le SnO₂ est transparent à la lumière UV à 365 nm (comme l'ont montré les analyses de photoluminescence), les porteurs de charge e⁻/h⁺ sont bien générés dans le ZnO. Il est alors probable que l'absence de photodégradation puisse être expliquée par une mauvaise diffusion des porteurs de charge e⁻/h⁺ vers la surface. Le diagramme de bande de l'hétérostructure indique que les électrons migrent préférentiellement vers la bande de conduction du SnO₂, et les trous vers la bande de valence du ZnO. Ainsi, selon la conception de l'hétérostructure, la migration des électrons vers la surface est favorisée ainsi que les trous vers le centre du matériau. Or, ce sont les trous qui permettent une oxydation directe de l'eau ou de l'oxygène adsorbé. Le fait que les trous soient piégés au centre des nano-fils peut expliquer la perte des propriétés de photodégradation.

Selon cette hypothèse, en recouvrant partiellement les nanofils de ZnO par des nanoparticules de SnO₂, les électrons seraient libres de générer des radicaux superoxydes O₂^{•-} à la surface des nanoparticules et les trous seraient libres de générer les radicaux hydroxyles OH^{•} à la surface des nanofils.

Afin de vérifier cette hypothèse, les propriétés de photodégradation des nanofils de ZnO recouverts plus ou moins de nanoparticules de SnO₂ ont été étudiées.

Les résultats obtenus lors de la photodégradation du bleu de méthylène avec ces systèmes sont présentés sur figure 10.

D'après l'allure des courbes, il apparaît que le ZnO non recouvert de nanoparticules de SnO₂ soit plus performant que l'hétérostructure ZnO/SnO₂ pour la photodégradation du bleu de méthylène.

En effet, en calculant la constante de photodégradation (k) (voir figure 11) pour chacun des systèmes, il s'avère que le ZnO seul dégrade plus rapidement le polluant que lorsqu'il est recouvert de SnO₂, avec une constante k de 7.10⁻³ min⁻¹ pour le ZnO seul contre 1.10⁻³ à 2.10⁻³ min⁻¹ après les différents recouvrements de nanoparticules de SnO₂. Il est intéressant de constater que la diminution de la vitesse de dégradation n'est pas proportionnelle au taux de recouvrement en nanoparticules de SnO₂. Après seulement 500 cycles de croissance de SnO₂, la constante de dégradation a déjà chuté à 1.10⁻³ min⁻¹.

Ces résultats ne coïncident pas avec la théorie émise selon laquelle la perte des propriétés photocatalytiques proviendrait uniquement d'un piégeage des trous au coeur du matériau. En effet, dans ce cas une diminution progressive de la vitesse de dégradation en fonction de l'augmentation du taux de recouvrement du ZnO par SnO₂ devrait être observée.

L'absence de propriétés photocatalytiques n'est donc pas uniquement due au piégeage des trous au coeur des nano-fils.

Le fait que le ZnO perde ses propriétés photocatalytiques même après un faible recouvrement de SnO₂ laisse penser que sa surface ou l'interface ZnO/SnO₂ doit être passivée.

En effet, la bonne activité photocatalytique d'une hétérostructure dépend de la possibilité qu'ont les espèces e⁻ et h⁺ à migrer vers l'un ou l'autre des matériaux, mais aussi de l'état de surface du matériau exposé au milieu à dépolluer. Ainsi, la surface spécifique disponible, la mouillabilité, la rugosité du matériau exposé (ici les nanoparticules de SnO₂) ainsi que sa composition chimique (présence de défauts) sont aussi à prendre en compte.

Si l'interface n'est pas transparente pour les espèces e⁻ et h⁺, leur recombinaison risque d'être favorisée, et donc la photodégradation en sera altérée. Il en est de même, si la surface ne favorise plus l'adsorption des polluants.

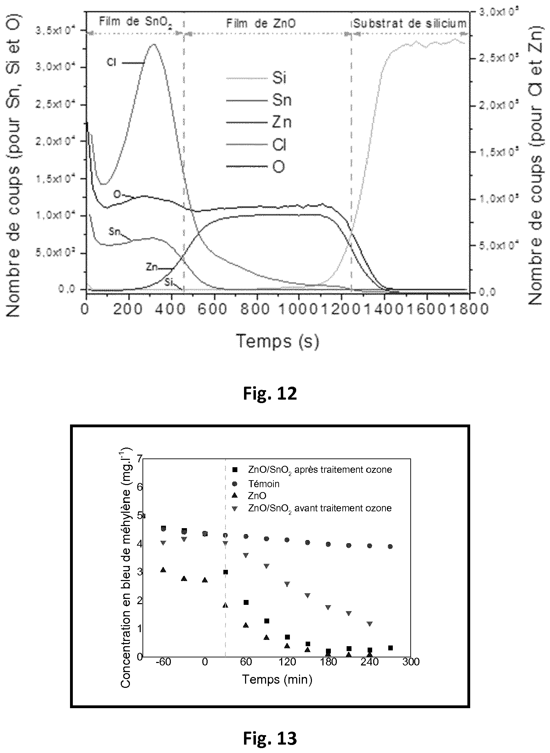

La figure 12 montre une analyse SIMS en profondeur d'un dépôt de SnO₂ réalisé par ALD sur un film de ZnO. La présence de chlore dans le film de SnO₂, ainsi qu'à l'interface ZnO/SnO₂ est révélée et pourrait expliquer la perte des propriétés photocatalytiques.

Le chlore provient probablement du précurseur nécessaire à la formation de la couche de SnO₂, à savoir le Sncl₄.

Le chlore piégé dans le film peut agir comme un donneur électronique recombinant les trous formés lors de l'excitation sous lumière UV. Ainsi, l'amélioration ou la diminution des performances de photodégradation d'un photocatalyseur de type ZnWO₄ en fonction de la quantité de dopage en chlore a déjà été mise en évidence auparavant. Dans l'étude, les auteurs ont montré qu'à partir d'un ratio de [Cl]/[Zn]>0,3 dans le matériau, la probabilité de recombinaison des porteurs de charges augmente car la distance entre les différents sites de recombinaison diminue avec l'augmentation des donneurs électroniques.

Il est donc possible que ce type de comportement apparaisse au niveau de l'hétérostructure ZnO/SnO₂, et que le chlore présent dans le film piège les trous photo-générés.

Suivant cette hypothèse, un traitement ozone/UV a été réalisé afin d'éliminer les défauts présents dans le matériau. Il en résulte une hétérostructure ZnO/SnO₂ possédant une photo-activité identique à celle du ZnO seul, comme indiqué à la figure 13. Il est donc évident qu'une passivation du matériau apparaît après croissance du SnO₂ et qu'un traitemet à l'ozone permet de retirer le chlore présent et d'améliorer l'activité photocatalyique du nouveau matériau.

Bien que l'activité photocatalytique de l'hétérostructure ZnO/SnO₂ soit identique à celle des nanofils de ZnO seul, l'hétérostructure ZnO/SnO₂ ne présente un taux de couverture du nanofil de ZnO par les nanoparticules de SnO₂ que de 50%. Dès lors, il peut être conclu que l'activité photocatalytique des hétérostructures ZnO/SnO₂ est deux fois supérieure à l'activité photocatalytique des nanofils de ZnO seul.

L'impact des matériaux synthétisés sur la biodiversité fluviatile a ensuite été étudié.

Une solution au problème de la dissolution des ions Zn²⁺ et de la toxicité inhérente aux nanostructures de ZnO pourrait résider dans la mise au point d'hétérostructures de types oxydes métalliques/oxydes métalliques dont l'oxyde en surface présente des propriétés d'insolubilité dans l'eau. De nombreux oxydes métalliques sont reconnus comme étant stables chimiquement, et insolubles dans l'eau, tels que TiO₂, SnO₂ ou Al₂O₃.

La biocompatibilité de cette structure a été testée sur des cellules de type Caco-2/TC7 ainsi que sur des bactéries de type *Vibrio fischeri.* Le recouvrement de ZnO par de l'alumine est connu pour améliorer les propriétés d'émission excitonique du ZnO (Richter et al., Nanotech., 2008, 19, 305202). Dans ce cas, des nano-fils ont été synthétisés par PVD sur des substrats de silicium avec des particules d'or comme catalyseur. L'alumine a été déposée autour des fils de ZnO par ALD en phase gazeuse à une température de 70 °C. Les auteurs ont remarqué qu'une structure ZnO/Al₂O₃ de type noyau-coquille améliorait considérablement l'intensité du pic excitonique du ZnO.

Ainsi, des échantillons ont été préparés dans le but de déterminer la biocompatibilité des films de ZnO, ZnO/Al₂O₃ et ZnO/SnO₂. Ceux-ci ont été caractérisés afin de déterminer précisément leurs propriétés avant et après exposition au milieu de croissance cellulaire.

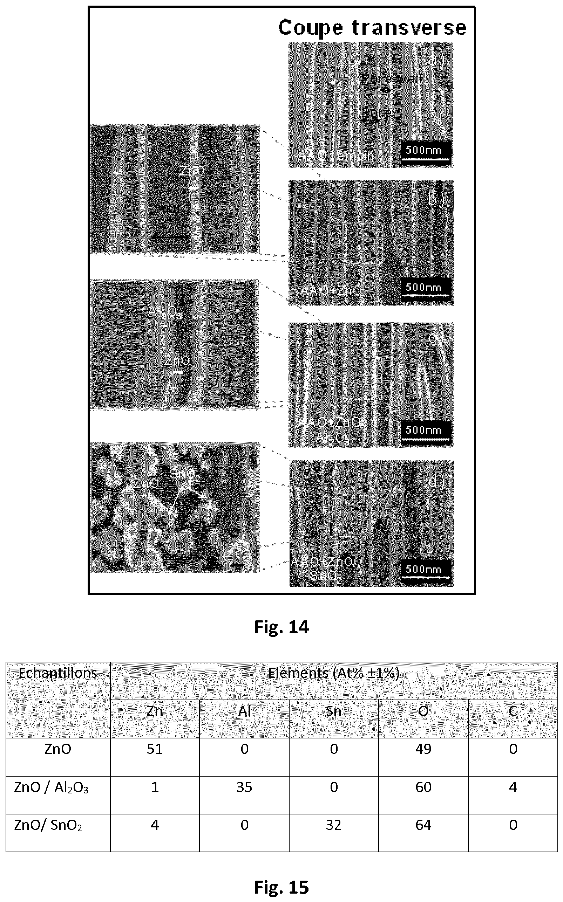

Une analyse MEB en coupe transverse des dépôts réalisés sur les parois des pores des membranes d'alumine met en évidence la présence du dépôt de ZnO recouvrant l'intégralité de la membrane de manière conforme et homogène (figure 14). L'échantillon de ZnO/Al₂O₃ révèle la présence d'un film homogène et conforme d'alumine recouvrant le ZnO. Ce résultat était attendu étant donné que le précurseur d'aluminium utilisé (le triméthyle aluminium) n'est pas chloré. Concernant l'échantillon de ZnO/SnO₂, des nanoparticules de SnO₂ se forment sur le film de ZnO, suivant le mécanisme de croissance de SnO₂ à l'intérieur de membranes mésoporeuses.

Une analyse XPS de la composition chimique des films créés atteste de la parfaite conformalité du film de ZnO à l'intérieur des pores de la membrane (figure 15). En effet, aucune trace d'aluminium provenant de la membrane n'est détectée, seulement le zinc et l'oxygène apparaissent. De plus, la stoechiométrie du film de ZnO est vérifiée avec un ratio 51-49 en zinc et oxygène respectivement. Il en est de même pour la croissance d'alumine Al₂O₃. L'XPS montre un rapport 35/60 en aluminium et oxygène respectivement, caractéristique de la stoechiométrie de l'alumine. Le recouvrement total du dépôt d'alumine est vérifié par l'absence du signal correspondant au zinc. La quantité de zinc détéctée (1%) n'est pas significative par rapport à l'erreur machine de l'analyse XPS, qui est de l'ordre de 1 %. Concernant le dépôt de SnO₂, la stoechiométrie du film est constatée par un rapport 32/64 en étain et oxygène respectivement. Néanmoins, la détection de 4 % de zinc prouve que le dépôt de SnO₂ ne couvre pas complètement le film de ZnO, comme les images MEB de la figure 14 le montrent.

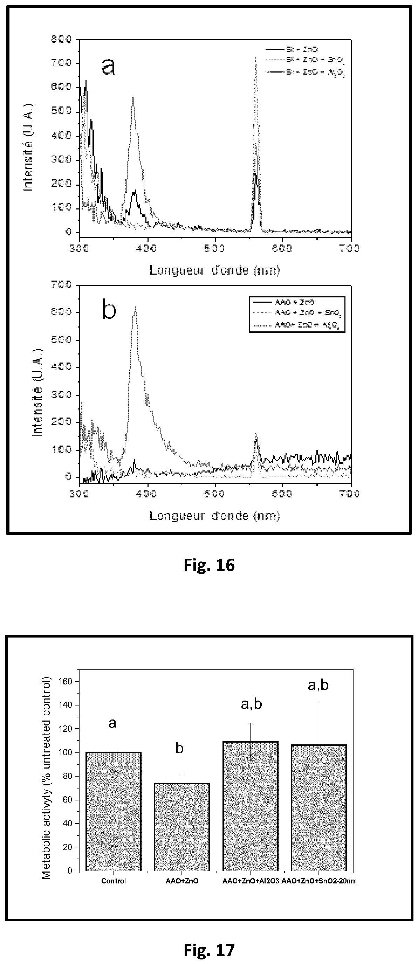

Les propriétés d'émissions optiques des différents matériaux sont présentées sur la figure 16. Les pics d'émission excitonique des films de ZnO de 20 nm d'épaisseur déposés par ALD sont de très faibles intensités, que ce soit sur substrat de silicium ou dans les membranes poreuses d'alumine. Dans le cas précis de l'alumine, il est même quasiment absent. En revanche, lorsque l'on recouvre le ZnO par un film homogène d'alumine, l'intensité d'émission excitonique et très fortement augmentée. Nous observons pour chacun des substrats utilisés une augmentation de l'émission à 380 nm au moins six fois plus importante après croissance d'une bicouche ZnO/Al₂O₃. Dans le cas de l'hétérostructure ZnO/SnO₂, on observe la disparition totale du pic excitonique. Ces observations sont conformes à ce à quoi peut s'attendre l'homme du métier.

Une exposition des cellules Caco-2/TC7 aux films de ZnO (déposés dans les membranes poreuses d'alumine) après 24 h dans le noir et en l'absence de contact direct entre les cellules et le matériau résulte en une diminution statistiquement significative de la viabilité cellulaire d'environ 30% comparée au contrôle (P<0,05) (P correspond au risque de faire une conclusion erronée. Le risque étant ici inférieur à 5 %, le résultat obtenu comme significatif) (figure 17). Ce résultat met en évidence le comportement toxique des films de ZnO envers les cellules colorectales testées. Dans ce cas présent, les films de ZnO sont supportés sur des membranes support. La toxicité observée ne peut donc pas provenir du ZnO lui-même, mais plus probablement d'ions Zn²⁺ suite à la dissolution du film.

La figure 17 montre également que dans le cas du ZnO recouvert par Al₂O₃ ou SnO₂, l'activité métabolique des cellules ne diffère pas par rapport au témoin. Les films d'Al₂O₃ et de SnO₂ semblent donc empêcher l'effet toxique des films de ZnO observé auparavant.

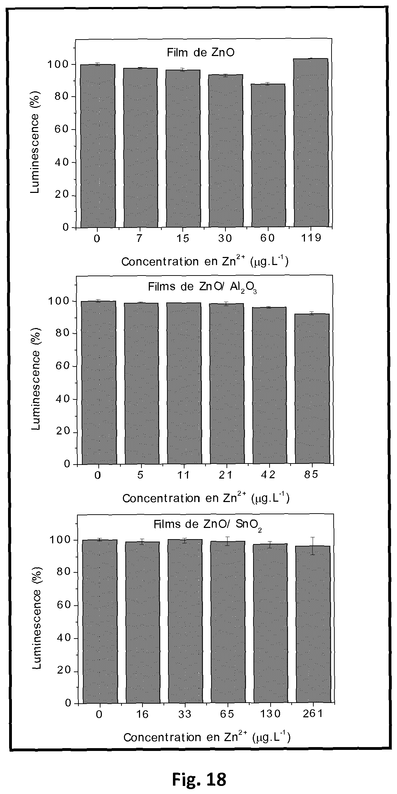

L'exposition des bactéries *V.fischeri* aux différents matériaux synthétisés (figure 18) ne révèle aucun effet néfaste de ces derniers, même dans le cas des films de ZnO seuls. La concentration maximum en ions zinc mesurée dans l'eau après exposition aux différents films est inférieure à 0,3 mg.l⁻¹. Cette concentration semble trop faible pour pouvoir induire un effet toxique sur ces bactéries. En effet, les bactéries sont plus robustes que les cellules Caco-2. Il a été déterminé que la concentration efficace médiane (appelée EC50), concentration à laquelle la moitié de la population testée présente un stress induit par l'agent extérieur, dans le cas d'ions zinc sur des bactéries *V.fischeri* est d'environ 1,9 mg.l⁻¹, et que la concentration induisant un stress à 20 % de la population de bactéries était de 0,9 mg.l⁻¹. Dans le cas présent, la concentration est bien plus faible, ce qui explique l'absence de stress induit par les matériaux.

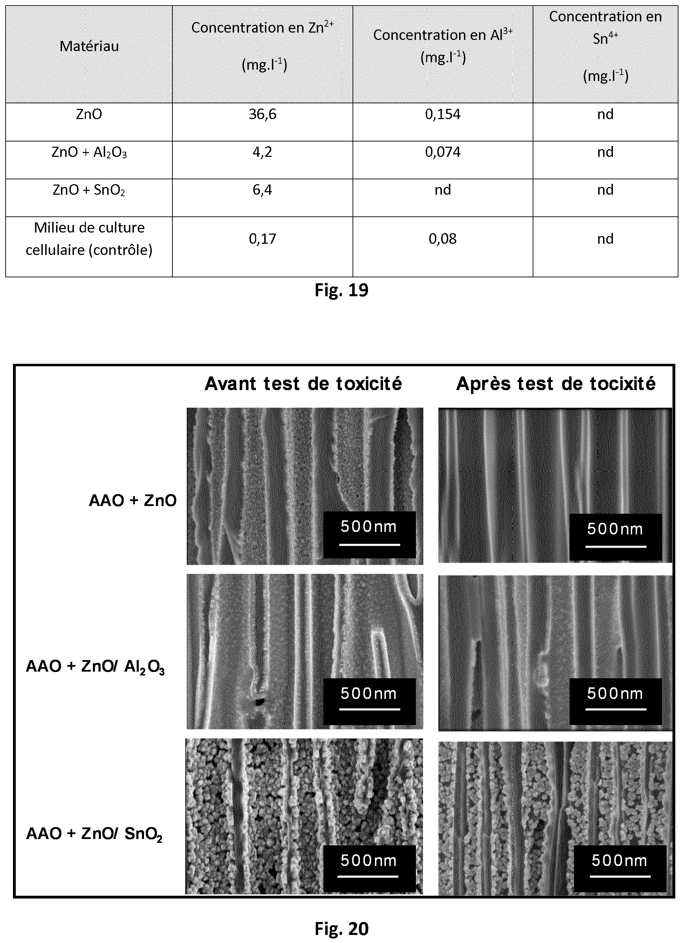

La concentration en ions zinc, aluminium et étain dans les milieux de culture cellulaire a été analysée par ICP-MS. La concentration en ion zinc après 24 heures d'exposition aux films de ZnO est approximativement de 36,6 mg.l⁻¹, soit plus de deux cent fois supérieure à celle mesurée dans un milieu de culture cellulaire témoin (figure 19). Ce résultat montre clairement l'instabilité des films de ZnO déposés par ALD en solutions aqueuses. Ce comportement peut être très problématique pour l'utilisation de tels matériaux dans le domaine du traitement de l'eau, ou toute autre application en phase liquide pouvant entrainer un contact avec un être humain. Pour s'affranchir de ce problème, la protection des films de ZnO par d'autres oxydes métalliques non solubles semble être une solution permettant d'améliorer la stabilité du matériau en milieu aqueux. Cependant, les propriétés intéressantes du ZnO (émission optique ou réactivité photocatalytique par exemple) pour l'application souhaitée ne doivent pas être négativement impactées par le matériau de recouvrement. Des films d'Al₂O₃ et de SnO₂ déposés en surface du ZnO inhibent l'effet cytotoxique. Ce phénomène est expliqué par une forte diminution de la concentration en ions zinc relargués dans le milieu de croissance cellulaire. Après la synthèse de films d'Al₂O₃ ou de SnO₂ sur le ZnO, la concentration en Zn²⁺ dans le milieu est diminuée d'un facteur 9 et 6 respectivement pour chacun des oxydes, par rapport aux films de ZnO seuls (figure 19). De plus, il est intéressant de noter que très peu, voire pas, d'ions aluminium et étain sont relargués dans le milieu après exposition, ce qui confirme la stabilité de ces oxydes en milieu aqueux.

Ainsi, en sus d'améliorer les propriétés optiques et opto-chimiques du ZnO, l'alumine et l'oxyde d'étain améliorent aussi la stabilité et la biocompatibilité du dispositif réalisé.

Les images MEB des surfaces de ZnO, ZnO/Al₂O₃ et ZnO/SnO₂ enregistrées après exposition des matériaux aux solutions de croissance cellulaire et indiquée à la figure 20 mettent en évidence la disparition du film de ZnO lorsque ce dernier n'est pas recouvert par un autre matériau insoluble. Ces photographies sont en parfaite adéquation avec les concentrations de Zn²⁺ mesurées dans les milieux de croissance cellulaire suite à la dissolution du ZnO en Zn²⁺. A l'inverse, les surfaces de ZnO/Al₂O₃ et ZnO/SnO₂ sont identiques à celles avant exposition, ce qui explique la diminution de la dissolution du ZnO ainsi que l'absence d'ions aluminium ou étain.

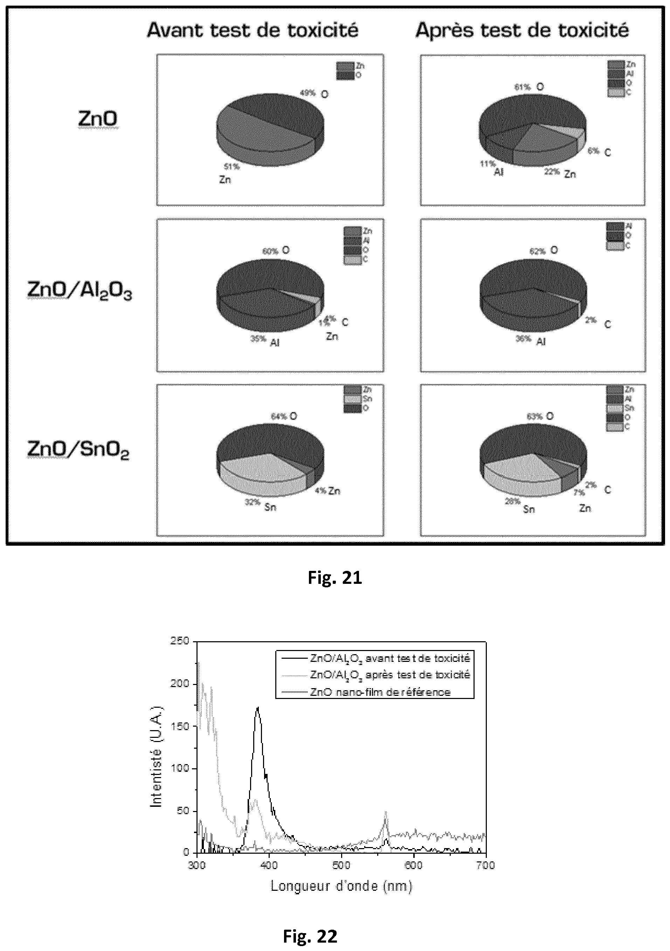

L'analyse XPS des surfaces corrobore les résultats observés par microscopie électronique à balayage ainsi que par l'ICP-MS. En effet, pour les échantillons de ZnO non recouverts, l'aluminium provenant du substrat est fortement détecté, à hauteur de 11 % alors que la quantité de zinc est approximativement divisée par deux (figure 21). L'XPS confirme donc la dissolution du film de ZnO, étant donné que l'aluminium n'était pas détecté avant exposition au milieu de culture cellulaire. Dans le cas des films de ZnO recouverts d'Al₂O₃, la signature XPS de la surface reste la même avant et après tests de toxicité. L'insolubilité précédemment observée est alors confirmée. Il en est de même pour l'analyse des films ZnO/SnO₂. Même si le ZnO est détecté à hauteur de 7 %, cette valeur reste très proche de celle observée avant les tests (4 %). La quantité d'étain reste elle quasiment identique. Ce résultat ne montre pas une forte perte ZnO, mais au contraire indique la présence du film de ZnO dans les pores de la membrane, même après exposition au milieu de croissance cellulaire.

Par ailleurs, il est intéressant de noter que les propriétés optiques du ZnO recouvert par l'alumine restent supérieures à celles du ZnO seul, même après un temps de résidence de 24 heures dans le milieu de croissance cellulaire (figure 22). L'intensité du pic excitonique à 380 nm diminue d'un facteur trois après tests toxicologiques, mais reste bien supérieure à celle du ZnO seul.

L'impact toxique que peut présenter un matériau à base de ZnO lors d'une utilisation en milieu aqueux a été donc mis en évidence à travers des tests de cytotoxicité sur des cellules colorectales de type Caco-2/TC7 et des tests de microtoxicité sur des bactéries de type *Vibrio fischeri.* La dissolution du ZnO sous forme d'ions Zn²⁺a été étudiée et il a été constaté qu'elle induisait un stress cytotoxique menant à une diminution de la viabilité des cellules de 30 %.

Cette cytotoxicité peut cependant être évitée en synthétisant des bicouches avec d'autres oxydes insolubles, comme l'alumine ou l'oxyde d'étain.

En plus de rendre le dispositif mis au point biocompatible, l'alumine déposée en surface du ZnO permet une forte amélioration des propriétés d'émission excitoniques, alors que l'oxyde d'étain permet la formation d'une hétérostructure ZnO/SnO₂. Ces deux systèmes ZnO/Al₂O₃ et ZnO/SnO₂ apparaissent alors comme une possibilité pour la fabrication de dispositifs biocompatibles, notamment le système ZnO/SnO₂ pour le traitement de l'eau par photocatalyse.

## Revendications

1. Procédé pour synthétiser des hétérostructures comprenant des nanofils de ZnO partiellement recouverts de nanoparticules de SnO₂, lesdites hétérostructures étant intégrées dans un substrat poreux,
ledit procédé comprenant les étapes suivantes,
a) activation dudit substrat poreux par déposition d'un film de ZnO, ladite étape d'activation nécessitant un premier précurseur de zinc ;
b) croissance de nanofils de ZnO sur ledit substrat poreux activé lors de l'étape (a), ladite étape de croissance nécessitant un second précurseur de zinc ;
c) déposition de nanoparticules de SnO₂ sur lesdits nanofils de ZnO obtenus lors de l'étape (b), ladite étape de déposition nécessitant un précurseur d'étain ;
**caractérisé en ce que**
ladite étape (c) est réalisée à une température comprise entre 250°C et 350°C, préférentiellement à 300°C et **en ce qu'**un contrôle du taux de déposition des nanoparticules de SnO₂ est effectué,
ledit procédé comprend en outre une étape de traitement desdites hétérostructures au moyen de l'ultraviolet et/ou de l'ozone.

2. Procédé selon la revendication 1, **caractérisé en ce que** l'étape (c) est réalisée par la technique de déposition de couche atomique, ladite technique étant configurée pour contrôler le taux de déposition des nanoparticules de SnO₂ sur lesdits nanofils de ZnO obtenus lors de l'étape (b).

3. Procédé selon l'une ou l'autre des revendications 1-2, **caractérisé en ce qu'**une étape de recuit est réalisée entre l'étape (b) et l'étape (c), ladite étape de recuit étant réalisée à une température comprise entre 250°C et 350°C, préférentiellement 300°C.

4. Procédé selon l'une ou l'autre des revendications 1-3, **caractérisé en ce que** l'étape (b) est réalisée à une température comprise entre 70°C et 100°C, préférentiellement à 80°C, pendant une durée comprise entre 0,5 heures et 7 heures, préférentiellement entre 4 heures et 6 heures, plus préférentiellement 5 heures et/ou **en ce que** le premier précurseur de zinc est le diéthylzinc, le second précurseur de zinc est l'acétate de zinc et le précurseur d'étain est le tétrachlorure d'étain.

5. Hétérostructure comprenant des nanofils de ZnO partiellement recouverts de nanoparticules de SnO₂ obtenue par le procédé selon l'une ou l'autre des revendications 1 à 4.

6. Hétérostructure selon la revendication 5, **caractérisée en ce que** ladite hétérostructure présente un taux de recouvrement du ZnO par les nanoparticules SnO₂ compris entre 40% et 70%, préférentiellement compris entre 50% et 58%.

7. Hétérostructure selon l'une ou l'autre des revendications 5-6, **caractérisé en ce que** ladite hétérostructure est un oxydant.

8. Substrat poreux adapté pour faire partie d'un dispositif de filtration photocatalytique, **caractérisée en ce que** ledit substrat est partiellement ou totalement recouvert d'hétérostructure selon l'une ou l'autre des revendications 5-7, ledit substrat poreux étant configuré pour faciliter le traitement photocatalytique d'au moins un micropolluant présent dans l'eau, ledit au moins un micropolluant faisant préférentiellement partie des dérivés antibiotiques, fongicides, pesticides, insecticides, hormonaux, et/ou n'importe quelle combinaison de ceux-ci, ledit au moins un micropolluant étant plus préférentiellement l'acide acétylsalicylique, la carbamazépine, la lidocaïne, le métoprolol, l'aténolol, la sulfadimidine, le dichlophénac, le propanolol, leurs dérivés, et/ou n'importe quelle combinaison de ceux-ci.

9. Substrat poreux selon la revendication 8, **caractérisé en ce que** ledit substrat poreux est une membrane poreuse dont les pores sont des macropores ou des mésopores.

10. Dispositif de filtration photocatalytique adapté à dégrader de manière photocatalytique au moins un micropolluant présent dans l'eau, **caractérisé en ce que** ledit dispositif comprend au moins un substrat poreux selon l'une ou l'autre des revendications 8-9.

11. Utilisation d'une hétérostructure comprenant des nanofils de ZnO partiellement recouverts de nanoparticules de SnO₂ en accord avec l'hétérostructure selon l'une ou l'autre des revendications 5-7, dans un procédé de dégradation d'au moins un micropolluant présent dans l'eau, ledit au moins un micropolluant faisant préférentiellement partie des dérivés antibiotiques, fongicides, pesticides, insecticides, hormonaux, et/ou n'importe quelle combinaison de ceux-ci, ledit au moins un micropolluant étant plus préférentiellement l'acide acétylsalicylique, la carbamazépine, la lidocaïne, le métoprolol, l'aténolol, la sulfadimidine, le dichlophénac, le propanolol, leurs dérivés, et/ou n'importe quelle combinaison de ceux-ci.

## Patentansprüche

1. Verfahren zum Synthetisieren von Heterostrukturen, die ZnO-Nanodrähte umfassen, die teilweise mit SnO₂-Nanopartikeln überzogen sind, wobei die Heterostrukturen in einem porösen Substrat integriert sind,
wobei das Verfahren die folgenden Schritte umfasst:
a) Aktivieren des porösen Substrats durch Abscheidung eines ZnO-Films, wobei der Aktivierungsschritt einen ersten Zinkvorläufer erfordert;
b) Wachstum von ZnO-Nanodrähten auf dem in Schritt (a) aktivierten porösen Substrat, wobei der Wachstumsschritt einen zweiten Zinkvorläufer erfordert;
c) Abscheidung von SnO₂-Nanopartikeln auf den in Schritt (b) erhaltenen ZnO-Nanodrähten, wobei der Abscheidungsschritt einen Zinnvorläufer erfordert;
**dadurch gekennzeichnet, dass**
der Schritt (c) bei einer Temperatur zwischen 250 °C und 350 °C, vorzugsweise 300 °C, durchgeführt wird und dass eine Steuerung der Abscheidungsrate der SnO₂-Nanopartikel durchgeführt wird,
das Verfahren ferner einen Schritt der Behandlung der Heterostrukturen mittels Ultraviolett und/oder Ozon umfasst.

2. Verfahren nach Anspruch 1, **dadurch gekennzeichnet, dass** der Schritt (c) durch die Atomschichtabscheidungstechnik durchgeführt wird, wobei die Technik konfiguriert ist, die Abscheidungsrate der SnO₂-Nanopartikel auf den in Schritt (b) erhaltenen ZnO-Nanodrähten zu steuern.

3. Verfahren nach einem der Ansprüche 1-2, **dadurch gekennzeichnet, dass** ein Schritt des Glühens zwischen Schritt (b) und Schritt (c) durchgeführt wird, wobei der Schritt des Glühens bei einer Temperatur zwischen 250 °C und 350 °C, vorzugsweise 300 °C durchgeführt wird.

4. Verfahren nach einem der Ansprüche 1-3, **dadurch gekennzeichnet, dass** der Schritt (b) bei einer Temperatur zwischen 70 °C und 100 °C, vorzugsweise 80 °C, während eines Zeitraums zwischen 0,5 Stunden und 7 Stunden, vorzugsweise zwischen 4 Stunden und 6 Stunden, besonders bevorzugt 5 Stunden durchgeführt wird, und/oder dass der erste Zinkvorläufer Diethylzink ist, der zweite Zinkvorläufer Zinkacetat ist und der Zinnvorläufer Zinntetrachlorid ist.

5. Heterostruktur, die ZnO-Nanodrähte umfasst, die teilweise mit SnO₂-Nanopartikeln überzogen sind, wobei die Heterostruktur durch das Verfahren nach einem der Ansprüche 1 bis 4 erhalten wird.

6. Heterostruktur nach Anspruch 5, **dadurch gekennzeichnet, dass** die Heterostruktur eine Überzugsrate von ZnO durch SnO₂-Nanopartikel zwischen 40 % und 70 %, vorzugsweise zwischen 50 % und 58 % aufweist.

7. Heterostruktur nach einem der Ansprüche 5-6, **dadurch gekennzeichnet, dass** die Heterostruktur ein Oxidationsmittel ist.

8. Poröses Substrat, das geeignet ist, Teil einer photokatalytischen Filtrationsvorrichtung zu sein, **dadurch gekennzeichnet, dass** das Substrat teilweise oder vollständig mit Heterostruktur nach einem der Ansprüche 5-7 überzogen ist, wobei das poröse Substrat konfiguriert ist, die photokatalytische Behandlung von mindestens einer im Wasser vorhandenen Mikroverunreinigung zu erleichtern, wobei die mindestens eine Mikroverunreinigung vorzugsweise Teil von antibiotischen, fungiziden, pestiziden, insektiziden, hormonellen Derivaten und/oder einer beliebigen Kombination davon ist, wobei die mindestens eine Mikroverunreinigung besonders bevorzugt Acetylsalicylsäure, Carbamazepin, Lidocain, Metoprolol, Atenolol, Sulfadimidin, Dichlofenac, Propanolol, deren Derivate und/oder eine beliebige Kombination davon ist.

9. Poröses Substrat nach Anspruch 8, **dadurch gekennzeichnet, dass** das poröse Substrat eine poröse Membran ist, deren Poren Makroporen oder Mesoporen sind.

10. Photokatalytische Filtrationsvorrichtung, die geeignet ist, photokatalytisch mindestens eine im Wasser vorhandene Mikroverunreinigung abzubauen, **dadurch gekennzeichnet, dass** die Vorrichtung mindestens ein poröses Substrat nach einem der Ansprüche 8-9 umfasst.

11. Verwendung einer Heterostruktur, die ZnO-Nanodrähte umfasst, die teilweise mit SnO₂-Nanopartikeln überzogen sind, in Übereinstimmung mit der Heterostruktur nach einem der Ansprüche 5-7, in einem Verfahren zum Abbau mindestens einer im Wasser vorhandenen Mikroverunreinigung, wobei die mindestens eine Mikroverunreinigung vorzugsweise Teil von antibiotischen, fungiziden, pestiziden, insektiziden, hormonellen Derivaten und/oder einer beliebigen Kombination davon ist, wobei die mindestens eine Mikroverunreinigung besonders bevorzugt Acetylsalicylsäure, Carbamazepin, Lidocain, Metoprolol, Atenolol, Sulfadimidin, Dichlofenac, Propanolol, deren Derivate und/oder eine beliebige Kombination davon ist.

## Claims

1. Process for synthesising heterostructures comprising ZnO nanowires partially covered with SnO₂ nanoparticles, said heterostructures being integrated into a porous substrate,
said process comprising the following steps,
a) activation of said porous substrate by deposition of a film of ZnO, said activation step necessitating a first zinc precursor;
b) growth of ZnO nanowires on said porous substrate activated in step (a), said growth step necessitating a second zinc precursor;
c) deposition of SnO₂ nanoparticles on said ZnO nanowires obtained in step (b), said deposition step necessitating a tin precursor;
**characterised in that**
said step (c) is performed at a temperature between 250°C and 350°C, preferably at 300°C and **in that** the rate of deposition of the SnO₂ nanoparticles is controlled,
said process also comprises a treatment step for said heterostructures by means of ultraviolet and/or ozone.

2. Process according to claim 1, **characterised in that** step (c) is performed by the technique of atomic layer deposition, said technique being configured to control the rate of deposition of the SnO₂ nanoparticles on said ZnO nanowires obtained in step (b).

3. Process according to either of claims 1-2, **characterised in that** an annealing step is performed between step (b) and step (c), said annealing step being performed at a temperature between 250°C and 350°C, preferably 300°C.

4. Process according to any of claims 1-3, **characterised in that** step (b) is performed at a temperature between 70°C and 100°C, preferably at 80°C, for a duration between 0.5 hours and 7 hours, preferably between 4 hours and 6 hours, more preferably 5 hours, and/or **in that** the first zinc precursor is diethyl zinc and the tin precursor is tin tetrachloride.

5. Heterostructure comprising ZnO nanowires partially covered with SnO₂ nanoparticles, and obtained by the process according to any one of claims 1 to 4.

6. Heterostructure according to claim 5, **characterised in that** said heterostructure exhibits a rate of coverage of ZnO with SnO₂ nanoparticles between 40% and 70%, preferably between 50% and 58%.

7. Heterostructure according to any of claims 5-6, **characterised in that** said heterostructure is an oxidant.

8. Porous substrate adapted to form part of a photocatalytic filtration device, **characterised in that** said substrate is partially or totally covered with heterostructure according to any one of claims 5-7, said porous substrate being configured to facilitate the photocatalytic
treatment of at least one micropollutant present in water, said at least one micropollutant preferably forming part of the antibiotic, fungicidal, pesticidal, insecticidal or hormonal derivatives and/or any combination thereof, said at least one micropollutant being more preferably acetylsalicylic acid, carbamazepine, lidocaine, metoprolol, atenolol, sulfadimidine, dichlophenac, propranolol, their derivatives, and/or any combination thereof.

9. Substrate according to claim 8, **characterised in that** said porous substrate is a porous membrane the pores of which are macropores or mesopores.

10. Photocatalytic filtration device adapted to degrade photocatalytically at least one micropollutant present in water, **characterised in that** said device comprises at least one porous substrate according to any one of claims 8-9.

11. Use of a heterostructure comprising ZnO nanowires partially covered with Sn0₂ nanoparticles consistent with the heterostructure according to any one of claims 5-7, in a process of degradation of at least one micropollutant present in water, said at least one micropollutant preferably forming part of the antibiotic, fungicidal, pesticidal, insecticidal or hormonal derivatives and/or any combination thereof, said at least one micropollutant being more preferably acetylsalicylic acid, carbamazepine, lidocaine, metoprolol, atenolol, sulfadimidine, dichlophenac, propranolol, their derivatives, and/or any combination thereof.
